(19) **Europäisches Patentamt**

**European Patent Office**

**Office européen des brevets**

(11) Veröffentlichungsnummer: **0 314 057 B1**

(12) ## EUROPÄISCHE PATENTSCHRIFT

(45) Veröffentlichungstag der Patentschrift: **03.06.92**

(21) Anmeldenummer: **88117723.2**

(22) Anmeldetag: **25.10.88**

Die Akte enthält technische Angaben, die nach dem Eingang der Anmeldung eingereicht wurden und die nicht in dieser Patentschrift enthalten sind.

(51) Int. Cl.⁵: **B01J 23/56**, B01J 23/89, B01D 53/36

(54) **Rhodium-freier Dreiwegkatalysator.**

(30) Priorität: **30.10.87 DE 3736810**

(43) Veröffentlichungstag der Anmeldung:
**03.05.89 Patentblatt 89/18**

(45) Bekanntmachung des Hinweises auf die Patenterteilung:
**03.06.92 Patentblatt 92/23**

(84) Benannte Vertragsstaaten:
**AT BE CH DE ES FR GB GR IT LI LU NL SE**

(56) Entgegenhaltungen:
**EP-A- 0 142 858**          **EP-A- 0 152 052**
**FR-A- 2 449 475**          **US-A- 3 023 173**
**US-A- 4 316 822**          **US-A- 4 331 565**

(73) Patentinhaber: **Degussa Aktiengesellschaft**
**Weissfrauenstrasse 9**
**W-6000 Frankturt am Main 1(DE)**

(72) Erfinder: **Koberstein, Edgar, Dr.**
**Wolfskernstrasse 8**
**W-8755 Alzenau(DE)**
Erfinder: **Engler, Bernd, Dr.**
**Treuener Strasse 2**
**W-6450 Hanau 9(DE)**
Erfinder: **Domesle, Rainer, Dr.**
**Wingertstrasse 202**
**W-6457 Maintal 1(DE)**
Erfinder: **Völker, Herbert**
**Bogenstrasse 43**
**W-6450 Hanau 11(DE)**

## Beschreibung

Die Erfindung betrifft einen Rhodium-freien Dreiweg-Katalysator mit einem wabenförmigen Träger aus Keramik oder Metall, einem Überzug aus Aluminiumoxid der Übergangsreihe, wobei der Überzug 25 - 50 Gew.-% Cerdioxid und 0,03 - 3 Gew.-% Palladium und Platin im Gewichtsverhältnis 0.1 : 1 - 10 : 1 enthält, wobei sich die Gewichtsmengen von Aluminiumoxid, Cerdioxid und Edelmetall auf 100 % ergänzen.

Aufgrund der in letzter Zeit stark angestiegenen Rhodiumpreise und der Versorgungsunsicherheit entstand für die Hersteller von Katalysatoren zur Reinigung der Abgase von Verbrennungskraftmaschinen das Bedürfnis, Katalysatorzusammensetzungen zu entwickeln, welche unter Verzicht auf Rhodium eine äquivalente Konversion der in den Abgasen von Verbrennungskraftmaschinen enthaltenen Schadstoffe Co, Kohlenwasserstoffe und einen für die praktische Anwendung ausreichenden Umsatz von Stickoxiden aufweisen.

Bei Katalysatoren, die sowohl Palladium als auch Platin enthalten, ist unter Beibehaltung der üblichen Edelmetallmengen, ein Ersatz des Rhodiums möglich, sofern gleichzeitig eine hohe $CeO_2$-Menge im Trägermaterial vorliegt.

So offenbart die US-A-4 316 822 einen Rhodium-freien Dreiweg-Katalysator mit einem wabenförmigen Cordieritträger, welcher mit einer porösen Schicht aus Keramik, Zirkonoxid und Ceroxid überzogen ist, wobei letzteres zwischen 27 und 35 %, bezogen auf die Gewichtssumme aus poröser Keramik, Zirkonoxid, Ceroxid und Platin und/oder Palladium ausmacht. Die poröse Schicht aus Keramik kann aus Aluminiummagnesium-Spinell, $\alpha$-Aluminiumoxid oder $\delta$-Aluminiumoxid bestehen, wobei es sich ausnahmslos um niederoberflächige, hochgeglühte Stoffe handelt.

Der Erfindung liegt die Aufgabe zugrunde, bei einem Rhodium-freien Dreiweg-Katalysator mit einem wabenförmigen Träger aus Keramik oder Metall, einem Überzug aus Aluminiumoxid der Übergangsreihe, wobei der Überzug 25 - 50 Gew.-% Cerdioxid und 0,03 - 3 Gew.-% Palladium und Platin im Gewichtsverhältnis 0.1 : 1 - 10 : 1 , wobei sich die Gewichtsmengen von Aluminiumoxid, Cerdioxid und Edelmetall auf 100 % ergänzen, zu erreichen, daß die spezifischen Eigenwirkungen der beiden Edelmetalle Palladium und Platin bei der Anwendung des Katalysators erhalten bleiben.

Dies wird erfindungsgemäß durch einen schichtartigen Aufbau des Überzugs, wobei die erste, untere Schicht Platin und die zweite, obere Schicht Palladium enthält, erreicht.

Als Aluminiumoxid der Übergangsreihe kommen alle Kristallmodifikationen von $Al_2O_3$ (einzeln oder im Gemisch) mit Ausnahme des $\alpha$-$Al_2O_3$ in Betracht, wobei die spezifische Oberfläche nach BET zwischen 40 und 250 $m^2/g$ betragen kann.

Überraschenderweise zeigt sich, daß in der Kombination Pd/Pt/$CeO_2$ die Funktion der Edelmetallkomponente bei Einsatz gebräuchlicher Edelmetallmengen auf annähernd dasselbe Niveau wie bei üblichen, Platin, Rhodium und Cerdioxid enthaltenden Formulierungen gebracht werden kann, sofern die erfindungsgemäß vorgesehenen erhöhten Cerdioxidmengen und der schichtartige Aufbau des Überzugs zur Separierung der beiden Edelmetalle zur Anwendung kommen. Für die Edelmetallkomponenten kommen die gebräulichen Ausgangsstoffe in Form wasserlöslicher Salze zur Anwendung.

In den erfindungsgemäßen Katalysatoren können zum Zwecke der Aktivitätssteigerung, der Hochtemperaturbeständigkeit, der sog. Magerstabilität bei Abgaszusammensetzungen von $\lambda$ >1 und der Dauerstandsfestigkeit im Betrieb, bis zu 20 Gew.-% der Aluminiumoxidmenge durch Zirkondioxid, Lanthanoxid $La_2O_3$, Neodymoxid $Nd_2O_3$, Praseodymoxid $Pr_6O_{11}$, Nickeloxid NiO als Einzelsubstanz oder im Gemisch ersetzt sein.

Bei Verwendung oder Mitverwendung von Nickeloxid NiO resultiert ferner eine Anhebung der Kohlenwasserstoffkonversion im fetten Abgasbereich und eine wesentliche Minderung der im Fettbetrieb, (d.h. bei $\lambda$ <1) auftretenden unerwünschten Emission von Schwefelwasserstoff.

Für die Einbringung der wichtigen Komponente Cerdioxid $CeO_2$ in den notwendigen hohen Konzentrationen ist neben Cernitrat, Ammoniumcernitrat, Ceroxalat, Cerchlorid, Cercarbonat, Ceroxid oder Cerhydroxid und anderen Cersalzen vor allem das Cer(III)acetat geeignet. Es kann in Form wäßriger Imprägnierlösung zur Fertigung der Monolith- bzw. Wabenkatalysatoren eingesetzt werden. Bei der Fertigung dieser Spezies ergibt sich aber auch die Möglichkeit, alle genannten Verbindungen in Form von Feststoffen dem Aluminiumoxid beizumischen.

Eine bewährte Maßnahme, insbesondere zur Stabilisierung der spezifischen Oberfläche des aktiven Aluminiumoxids bei Dauerbetrieb des Katalysators, besteht darin, das Gitter des Aluminiumoxids durch Erdalkalimetalloxid, Siliciumdioxid, Zirkondioxid oder durch Oxide der Seltenen Erden vorzustabilisieren. Gemäß einer Variante der Erfindung wird davon mit Vorteil Gebrauch gemacht.

Ein weiterer Gegenstand der Erfindung besteht in einem Verfahren, nach welchem der beschriebene Katalysator erhältlich ist. Es ist gekennzeichnet durch Beschichten des Trägers mittels einer Cersalz und/oder eine feste Cerverbindung sowie gegebenenfalls eine Verbindung der Promotorenelemente Zirkon, Lanthan, Neodym, Praseodym und/oder Nickel enthaltenden wäßrigen Aluminiumoxidsuspension, Trocknen und Tempern dieses ersten Überzugs an Luft bei 300 - 950° C, nachfolgendes Imprägnieren mit wäßriger Platinsalzlösung, Trocknen und gegebenenfalls Zwischentempern, entsprechende Erzeugung des zweiten, Cer und gegebenenfalls Promotoren enthaltenden Aluminiumoxidüberzugs und nachfolgendes Imprägnieren mit wäßriger Palladiumsalzlösung, Trocknen und abschließendes Tempern, wobei Zwischentemperung und abschließendes Tempern der beiden edelmetallhaltigen Schichten bei Temperaturen oberhalb 250° C durchgeführt werden.

Bevorzugt wird das Cerdioxid als Cer(III)acetat eingebracht.

Es kann durch Erdalkalimetalloxid, Siliciumdioxid, Zirkondioxid oder durch Oxide der Seltenen Erden in an sich bekannter Weise vorstabilisiertes Aluminiumoxid eingesetzt werden.

Besonders wirkungsvoll hat sich eine Verfahrensvariante erwiesen, bei der die beiden edelmetallhaltigen $Al_2O_3$-Schichten abschließend in einem Wasserstoff enthaltenden Gasstrom getempert werden.

Ein weiterer Gegenstand betrifft die Verwendung des vorgestellten Katalysators zur gleichzeitigen Konversion von Kohlenmonoxid, Kohlenwasserstoffen und Stickoxid aus den Abgasen von Verbrennungskraftmaschinen.

Die Erfindung wird nachfolgend durch Ausführungsbeispiele weiter erläutert.

Vergleichsbeispiel 1

Ein Wabenkörper aus Cordierit mit 62 Zellen/$cm^2$, 102 mm Durchmesser und 152 mm Länge wurde durch Tauchen in eine 35 %ige wäßrige Suspension, die $\gamma$-$Al_2O_3$ (140 $m^2$/g), Cer(III)acetat und Zirkonylacetat enthielt und in der diese Stoffe - gerechnet als Oxide - im Verhältnis $Al_2O_3$ : $CeO_2$ : $ZrO_2$ = 58 : 39 : 3 vorlagen, beschichtet.

Überschüssige Suspension wurde durch Ausblasen entfernt und der beschichtete Monolith nach dem Trocknen bei 120° C 2 h bei 600° C getempert, wobei aus den Acetaten $CeO_2$ und $ZrO_2$ entsteht. Die aufgebrachte Beschichtung setzte sich aus 128 g $Al_2O_3$, 86 g $CeO_2$ und 7 g $ZrO_2$ zusammen.

Der so beschichtete Wabenkörper wurde anschließend mit einer wäßrigen Lösung, die 0,59 g Pd in Form von $Pd(NO_3)_2$ und 1,18 g Pt in Form von $H_2PtCl_6$ enthielt, durch Imprägnieren belegt.

Nach der Trocknung des edelmetallimprägnierten Monolithen erfolgte eine 4-stündige Reduktion in Formiergas ($N_2$ : $H_2$ = 95 : 5) bei 550° C.

Vergleichsbeispiel 2

Es wurde ein Katalysator nach Vergleichsbeispiel 1 hergestellt mit dem einzigen Unterschied, daß nun 0,88 g Pd und 0,88 g Pt aufgebracht wurden.

Vergleichsbeispiel 3

Ein Wabenkörper wurde wie in Vergleichsbeispiel 1 beschrieben, mit einer Oxidauflage versehen. Anschließend wurde anstelle von Pd und Pt, jedoch unter gleichen Herstellungsbedingungen 1,47 g Pt in Form von $H_2PtCl_6$ und 0,29 g Rh in Form von $RhCl_3$ durch Imprägnieren aufgebracht.

Vergleichsbeispiel 4

Ein keramischer Wabenkörper nach Vergleichsbeispiel 1 wurde mit einer 30 %igen wäßrigen Suspension beschichtet, die $CeO_2$, eingebracht als $Ce(NO_3)_3$, und $\gamma$-$Al_2O_3$ (140 $m^2$/g) im Verhältnis 5 : 95 enthielt. Nach Temperung waren 152 g $Al_2O_3$ und 8 g $CeO_2$ auf dem Monolith vorhanden. Die übrigen Herstellungsparameter entsprachen Vergleichsbeispiel 1.

Vergleichsbeispiel 5

Aus den gemäß Vergleichsbeispielen 1 - 4 hergestellten Katalysatoren wurden parallel zu den Zellen zylindrische Probekörper mit 38 mm Durchmesser ausgebohrt, in einen Mehrkammertestreaktor eingebaut und im Abgasstrom eines Ottomotors hinsichtlich ihrer Funktion als Dreiwegkatalysator überprüft.

Als Testmotor diente ein 4-Zylindereinspritzmotor mit 1781 $cm^3$ Hubvolumen, ausgerüstet mit einer K-JETRONIC der Fa. Bosch.

Zur Beurteilung der Tieftemperaturaktivität der Katalysatoren wurde diejenige Temperatur bestimmt, bei der jeweils 50 % des im Abgasstrom enthaltenden Kohlenmonoxids der Kohlenwasserstoffe und der Stickoxide bei $\lambda$ = 0,995 umgesetzt werden.

Daneben wurde die katalytische Aktivität bei 450° C in einem dynamischen Test bei einer Wobbelfrequenz von 1 Hz und einer $\lambda$-Schwankungsbreite von 0,034 gemessen.

Die Raumgeschwindigkeit betrug dabei 64000 $h^{-1}$. Vor Katalysator variierte die Abgaszusammensetzung wie folgt

| CO | 2,4 - 1,4 Vol.% |
|---|---|
| HC | 450 - 350 ppm |
| $NO_x$ | 2500 - 2000 ppm |
| $O_2$ | 1,0 Vol.% |
| $CO_2$ | 13 - 14 Vol.% |

Zur Ermittlung des Dauerstandsverhaltens wurden die Katalysatoren 100 h lang am Motor bei Abgastemperaturen zwischen 450 und 850° C betrieben.

Die Ergebnisse dieser Untersuchungen sind in Tabelle 1 enthalten.

Wie die Meßwerte zeigen, sind die erfindungsgemäßen Pt/Pd-Katalysatoren nach den Vergleichsbeispielen 1 und 2 dem Pt/Rh-Katalysator des Vergleichsbeispiels 3 in der besonders wichtigen dynamischen Konvertierung im frischen Zustand und nach 100 h Motoralterung ebenbürtig. Lediglich beim Anspringverhalten sind sowohl im Frischzustand als auch nach Alterung Nachteile gegenüber dem Pt/Rh-Dreiwegkatalysator vorhanden. Diese Nachteile sind jedoch - besonders im Hinblick auf die sehr guten Ergebnisse in der dynamischen Konvertierung - nicht so gravierend, als daß sie einer Anwendung von Pt/Pd-Katalysatoren als Dreiwegkatalysatoren in der Praxis entgegenstünden.

Das Vergleichsbeispiel 4 entspricht in der Katalysatorformulierung einem handelsüblichen Pt/Pd-Oxidationskatalysator mit niedrigem $CeO_2$-Gehalt und unterscheidet sich von Pt/Pd-Dreiwegkatalysatoren durch seinen Verwendungszweck und die stark veränderte $CeO_2$-Konzentration im Trägermaterial.

Die katalytische Aktivität eines solchen handelsüblichen Oxidationskatalysators im hier angewandten Dreiwegkatalysatortest liegt, besonders bezüglich des $NO_x$-Umsatzes, deutlich niedriger als diejenige der erfindungsgemäßen hochcerhaltigen Pt/Pd-Katalysatoren nach den Vergleichsbeispielen 1 und 2. Aufgrund dieses Ergebnisses sind derartige, ausdrücklich für Oxidationszwecke vorgesehene Pt/Pd-Katalysatoren mit niedrigem $CeO_2$-Gehalt in der Praxis für einen Einsatz als Dreiwegkatalysatoren nicht geeignet, während für diese Anwendung die Katalysatoren nach den Vergleichsbeispielen 1 und 2 eine noch ausreichende katalytische Aktivität aufweisen.

Die folgenden Vergleichsbeispiele 6 - 8 sollen zeigen, daß Pt/Pd-Dreiwegkatalysatoren sogar eine höhere katalytische Aktivität als handelsübliche Pt/Rh-Dreiwegkatalysatoren, wie sie z. B. in der deutschen Patentschrift 29 07 106 beschrieben sind, aufweisen.

Vergleichsbeispiel 6

Ein keramischer Monolith mit 62 Zellen/$cm^2$, 102 mm Durchmesser und 152 mm Länge wurde durch Eintauchen mit einer Suspension belegt, die $\gamma$-$Al_2O_3$ (150 $m^2$/g), Ceracetat und Zirkonylnitrat im Verhältnis der Oxide $Al_2O_3$ : $CeO_2$ : $ZrO_2$ = 65 : 28 : 7 enthielt.

Nach dem Ausblasen überschüssiger Suspension wurde der beschichtete Wabenkörper bei 120° C getrocknet und 1 h bei 900° C aktiviert.

Die Beschichtungsmenge betrug 145 g $Al_2O_3$, 62 g $CeO_2$ und 15,5 g $ZrO_2$. Auf diesem mit Trägermaterial versehenen Monolithen wurde anschließend aus wäßriger Lösung 0.69 g Pd in Form von $PdCl_2$ und 1,39 g Pt in Form von $H_2PtCl_6$ durch Imprägnieren aufgebracht. Im Anschluß an die Trocknung des imprägnierten Formkörpers bei 150° C erfolgte eine zweistündige Reduktion bei 500° C im Wasserstoffstrom.

Vergleichsbeispiel 7

Der Vergleichskatalysator entsprach in Abmessungen und Herstellungsbedingungen dem Katalysatormuster aus Vergleichsbeispiel 6. Er unterschied sich davon aber durch die Zusammensetzung des Trägermaterials (139 g $Al_2O_3$, 10 g $CeO_2$, 12 g $ZrO_2$ und 6 g $Fe_2O_3$), das aus einer wäßrigen Suspension aus $\gamma$-$Al_2O_3$ (150 $m^2$/g), Ceracetat, Zirkonylacetat und Eisenoxid $Fe_2O_3$ aufgebracht wurde sowie dadurch, daß nun 1,47 g Pt in Form von $H_2PtCl_6$ und 0,29 g Rh in Form von $Rh(NO_3)_3$ aufimprägniert wurden.

4

Vergleichsbeispiel 8

Die nach den Vergleichsbeispielen 6 und 7 hergestellten Katalysatoren wurden nacheinander im Abgasstrom eines Ottomotors hinsichtlich der Wirkung als Dreiwegkatalysator geprüft. Die Testbedingungen entsprachen den in Vergleichsbeispiel 6 geschilderten mit der Ausnahme, daß zur Bestimmung der dynamischen Konvertierung eine $\lambda$-Schwankungsbreite von 0,068 und eine Raumgeschwindigkeit von 73000 $h^{-1}$ zugrundegelegt wurde. Daher lag nun folgende Abgaszusammensetzung vor:

| | |
|---|---|
| CO | 3,3 - 2,2 Vol.% |
| HC | 510 - 420 ppm |
| $NO_x$ | 1500 - 2100 ppm |
| $O_2$ | 1,6 Vol.% |
| $CO_2$ | 12 - 13 Vol.% |

Die Schadstoffkonvertierungen der Katalysatoren wurden im Frischzustand, und nach 24 h Temperung an Luft bei 950° C gemessen, vgl. hierzu Tabelle 2.

Im Frischzustand weist der Pt/Pd-Katalysator gegenüber dem Pt/Rh-Vergleichskatalysator im dynamischen Test vergleichbar hohe Konvertierungsraten auf. Im Anspringverhalten hat er bezüglich CO und HC Vorteile (niedrigere Temperaturen bei der 50% Konvertierung), aber Nachteile bezüglich der Stickoxide.

Anschließend wurden dieselben Katalysatoren 24 Stunden bei 950° C an Luft getempert, um eine Prüfung der Katalysatorstabilität bei zeitweise magerer Betriebsweise des Motors ($\lambda$ >1), wie sie bei modernen Dreiwegkonzepten üblich ist, und gleichzeitig vorhandenen hohen Temperaturen durchzuführen.

Der mit hohem Ceroxidgehalt ausgestattete Pt/Pd-Katalysator weist danach sehr viel höhere Konvertierungsraten im dynamischen Test sowie ein wesentlich besseres Anspringverhalten als das Vergleichsbeispiel auf. Dessen 50 %igen Umsätze von CO, HC und $NO_x$ liegen mit Werten > 450° C außerhalb des Bereiches üblicher Messungen und wurden daher schon nicht mehr erfaßt.

Vergleichsbeispiel 9

Ein zylindrischer Wabenkörper aus Cordierit mit 102 mm Durchmesser, 76 mm Länge und einer Zelldichte von 62 Zellen/cm² wird durch Tauchen in eine 30 %ige wäßrige Suspension, die Aluminiumoxid (140 m²/g), Ceracetat und Zirkonylacetat enthält, beschichtet.

Die überschüssige Suspension wird durch Ausblasen mit Druckluft entfernt und der beschichtete Monolith bei 120° C getrocknet. Dieser Beschichtungsvorgang wird gegebenenfalls wiederholt, um die gewünschte Beschichtungsmenge aufzubringen. Anschließend wird der beschichtete Monolith 45 Minuten bei 600° C getempert, wobei sich Cer- und Zirkonylacetat zu den jeweiligen Oxiden zersetzen. Die Menge und Art der aufgebrachten Oxide ist in Tabelle 3 angegeben.

Der so beschichtete Monolith wird mit einer wäßrigen Lösung aus $PdCl_2$ und $H_2PtCl_6$ imprägniert, die Pd und Pt im Verhältnis 1 : 2 enthält. Die aufgebrachte Edelmetallmenge beträgt 1,1 g pro Katalysator.

An die Trocknung des edelmetallimprägnierten Monolithen bei 150° C schließt sich eine zweistündige Reduktion in Formiergas ($N_2$ : $H_2$ = 95 : 5) bei 550° C an.

Vergleichsbeispiel 10

Es wurde ein Katalysator nach Vergleichsbeispiel 9 hergestellt mit dem einzigen Unterschied, daß das Verhältnis Pd : Pt nun 3 : 1 war.

Vergleichsbeispiel 11

Katalysator hergestellt nach Vergleichsbeispiel 9, mit dem Unterschied, daß statt Ceracetat festes $CeO_2$ (erhalten durch thermische Zersetzung von Cercarbonat an Luft bei 500° C) eingesetzt wurde.

Vergleichsbeispiel 12

Katalysator hergestellt nach Vergleichsbeispiel 9, wobei die Beschichtungssuspension Nickeloxid enthält.

Vergleichsbeispiel 13

Katalysator hergestellt nach Vergleichsbeispiel 9, wobei die Beschichtungssuspension Ceracetat in hoher Konzentration sowie Seltenerdacetate (La : Nd : Pr = 61 : 21 : 8) enthält.

Vergleichsbeispiel 14

Katalysator hergestellt nach Vergleichsbeispiel 11 mit den einzigen Unterschieden, daß der Katalysator kein $ZrO_2$ enthielt und nicht reduziert wurde.

Beispiel 1

Ein Katalysator mit schichtartigem Aufbau gemäß der Erfindung wird wie folgt hergestellt:
Ein zylindrischer Wabenkörper aus Cordierit mit 102 mm Durchmesser, 76 mm Länge und einer Zelldichte von 62 Zellen/$cm^2$ wird in einem ersten Verfahrensgang durch Tauchen in eine 30 %ige wäßrige Suspension, die Aluminiumoxid (140 $m^2$/g), Ceracetat und Zirkonylacetat enthält, beschichtet.

Die überschüssige Suspension wird durch Ausblasen mit Druckluft entfernt und der beschichtete Monolith bei 120° C getrocknet. Dieser Beschichtungsvorgang wird gegebenenfalls wiederholt, um 2/3 der insgesamt gewünschten Beschichtungsmenge aufzubringen. Anschließend wird der beschichtete Monolith 45 Minuten bei 600° C getempert, wobei sich Cer- und Zirkonacetat zu den jeweiligen Oxiden zersetzen.

Der so teilbeschichtete Monolith wird mit einer wäßrigen Lösung von $H_2PtCl_6$ imprägniert, getrocknet und bei 500° C an Luft getempert.

Im zweiten Verfahrensgang wird der Pt-haltige Monolith mit dem restlichen Drittel der Beschichtung versehen, getrocknet und wiederum bei 600° C 45 Min. getempert. Anschließend wird mit $Pd(NO_3)_2$-Lösung, welche Palladium, entsprechend der halben Gewichtsmenge des im ersten Verfahrensgang aufgebrachten Platins enthält, imprägniert, bei 150° C getrocknet und in Formiergas (5 % Wasserstoff in Stickstoff) bei 550° C 2 Stunden reduziert.

Der fertige Katalysator enthält 64 g $Al_2O_3$, 36 g $CeO_2$, 3.5 g $ZrO_2$ und 1.1 g Edelmetall im Gewichtsverhältnis 1 : 2.

Beispiel 2

Die Katalysatoren nach Beispiel 1 und Vergleichsbeispielen 9 - 14 wurden im Frischzustand und nach einer 12-stündigen thermischen Alterung bei 800° C an Luft einer anwendungstechnischen Prüfung mit einem synthetischen Abgasgemisch unterzogen. Hierzu wurden aus den monolithischen Katalysatoren zylindrische Probekörper mit 25 mm Durchmesser und 75 mm Länge ausgebohrt und in einem Testreaktor bei einer Raumgeschwindigkeit von 50 000 $h^{-1}$ vermessen.

| Prüfgaszusammensetzung | |
|---|---|
| $CO_2$ | 14 Vol. % |
| $O_2$ | 0,75 ± 0,75 Vol. % |
| CO | 1 Vol.% ± 1 Vol. % |
| $H_2$ | 0,33 Vol. % |
| $C_3H_6$/$C_3H_8$ (2/1) | 0,05 Vol. % |
| NO | 0,1 Vol. % |
| $H_2O$ | 10 Vol. % |
| $N_2$ | Rest |

Der dynamische Test erfolgte mit einer Frequenz von 1 Hz bei 400° C. Das Anspringverhalten wurde bei $\lambda$ = 0,995 für NO und bei $\lambda$ = 1,01 für CO und Kohlenwasserstoffe jeweils mit einer Aufheizrate von 30 °K/min. gemessen.

Die Ergebnisse der Prüfung der katalytischen Aktivität sind in Tabelle 4 zusammengestellt.

TABELLE 1    Katalytische Aktivität der Katalysatoren nach den Vergleichsbeispielen 1 - 4

| Katalysator nach Vergleichs-beispiel | Umsatz bei T $^{o}$C $\lambda$ = 0,995 | | | | | | Konvertierung in % bei $\lambda$ = 0,995 | | | | | |
|---|---|---|---|---|---|---|---|---|---|---|---|---|
| | Frischzustand | | | 100 h Motor | | | Frischzustand | | | 100 h Motor | | |
| | CO | HC | $NO_x$ | CO | HC | $NO_x$ | CO | HC | $NO_x$ | CO | HC | $NO_x$ |
| 1 | 312 | 318 | 364 | 325 | 329 | 401 | 99 | 97 | 98 | 97 | 96 | 94 |
| 2 | 318 | 321 | 375 | 332 | 335 | 421 | 98 | 95 | 97 | 97 | 95 | 94 |
| 3 | 295 | 297 | 316 | 305 | 308 | 340 | 98 | 93 | 99 | 98 | 93 | 96 |
| 4 | 325 | 331 | >450 | 348 | 351 | >450 | 92 | 96 | 83 | 80 | 84 | 61 |

EP 0 314 057 B1

TABELLE 2    Aktivitätsvergleich der Katalysatoren nach den
Vergleichsbeispielen 6 und 7

| | Katalysator nach | |
|---|---|---|
| | V- Beispiel 6 | V-Beispiel 7 |

**FRISCHZUSTAND**

50 % Konvertierung

| | | V- Beispiel 6 | V-Beispiel 7 |
|---|---|---|---|
| $\lambda$ = 1,02 | CO | 275 °C | 290 °C |
| $\lambda$ = 1,02 | HC | 278 °C | 295 °C |
| $\lambda$ = 0,984 | $NO_x$ | 330 °C | 292 °C |

**DYNAMISCHE KONVERTIERUNG**

| | | | |
|---|---|---|---|
| = 0,995 | CO | 98 % | 97 % |
| | HC | 98 % | 96 % |
| | $NO_x$ | 98 % | 97 % |

**GEALTERT 24 h 950°C LUFT**

50 % Konvertierung

| | | | |
|---|---|---|---|
| $\lambda$ = 1,02 | CO | 383 °C | > 450 °C |
| $\lambda$ = 1,02 | HC | 383 °C | > 450 °C |
| $\lambda$ = 0,984 | $NO_x$ | > 450 °C | > 450 °C |

**DYNAMISCHE KONVERTIERUNG**

| | | | |
|---|---|---|---|
| $\lambda$ = 0,995 | CO | 80 % | 6 % |
| | HC | 90 % | 8 % |
| | $NO_x$ | 62 % | 5 % |

EP 0 314 057 B1

TABELLE 3    Zusammensetzung der Katalysatoren der Vergleichsbeispiele 9 - 14
und Beispiel 1

| Beispiel | Beschichtungszusammensetzung in Gramm pro Monolith | | | Verhältnis der Edelmetalle in der aktiven Phase |
| | $Al_2O_3$ | $CeO_2$ | weitere Zusätze | |
|---|---|---|---|---|
| (Vgl.) 9 | 64 | 36 | 3,5 $ZrO_2$ | Pd : Pt = 1 : 2 |
| " 10 | 63 | 36 | 3,5 $ZrO_2$ | Pd : Pt = 3 : 1 |
| " 11 | 64 | 36 | 3,5 $ZrO_2$ | Pd : Pt = 1 : 2 |
| " 12 | 66 | 36 | 8 NiO 3,5 $ZrO_2$ | Pd : Pt = 1 : 2 |
| " 13 | 52 | 46 | 5 SE-Oxide | Pd : Pt = 1 : 2 |
| " 14 | 64 | 36 | -- | Pd : Pt = 1 : 2 |
| Beispiel 1 | 64 | 36 | 3,5 $ZrO_2$ | Pd : Pt = 1 : 2 |

TABELLE 4

Ansprechverhalten und Schadstoffkonvertierungen im dynamischen Test für die Katalysatoren nach Vergl.-Beisp. 1-14 und Beispiel 9-14

| Beispiele | Ansprechtemperaturen 50 % Umsatz bei T°C | | | Konvertierungen in % bei $\lambda$ = 0,995 | | |
|---|---|---|---|---|---|---|
| | CO* | HC* | NO$_x$** | CO | HC | NO$_x$ |
| FRISCH (V) 9 | 192 | 221 | 200 | 99 | 98 | 99 |
| (V) 10 | 198 | 224 | 205 | 99 | 99 | 99 |
| (V) 11 | 185 | 210 | 190 | 98 | 99 | 99 |
| (V) 12 | 195 | 218 | 199 | 99 | 99 | 99 |
| (V) 13 | 205 | 230 | 212 | 97 | 96 | 97 |
| (V) 14 | 186 | 212 | 194 | 97 | 99 | 99 |
| B 1 | 196 | 224 | 204 | 99 | 99 | 99 |
| GEALTERT (V) 9 | 197 | 261 | 311 | 94 | 93 | 83 |
| (V) 10 | 201 | 269 | 330 | 94 | 94 | 79 |
| (V) 11 | 212 | 286 | 360 | 90 | 91 | 73 |
| (V) 12 | 202 | 271 | 321 | 95 | 94 | 85 |
| (V) 13 | 203 | 268 | 315 | 94 | 93 | 82 |
| (V) 14 | 215 | 290 | 373 | 89 | 90 | 72 |
| B 1 | 195 | 255 | 305 | 95 | 94 | 84 |

\* CO und Kohlenwasserstoffe bei $\lambda$ = 1,01

\*\* NO bei $\lambda$ = 0,995

## Patentansprüche

1. Rhodium-freier Dreiweg-Katalysator mit einem wabenförmigen Träger aus Keramik oder Metall, einem Überzug aus Aluminiumoxid der Übergangsreihe, wobei der Überzug 25 - 50 Gew.-% Cerdioxid und 0,03 - 3 Gew.-% Palladium und Platin im Gewichtsverhältnis 0. 1 : 1 - 10 : 1 enthält, wobei sich die Gewichtsmengen von Aluminiumoxid, Cerdioxid und Edelmetall auf 100 % ergänzen, **gekennzeichnet durch** einen schichtartigen Aufbau des Überzugs, wobei die erste, untere Schicht Platin und die zweite, obere Schicht Palladium enthält.

2. Katalysator nach Anspruch 1, **dadurch gekennzeichnet,** daß bis zu 20 Gew.% der Aluminiumoxidmenge durch Zirkondioxid, Lanthanoxid $La_2O_3$, Neodymoxid $Nd_2O_3$, Praseodymoxid $Pr_6O_{11}$, Nickeloxid NiO als Einzelsubstanz oder im Gemisch ersetzt ist.

3. Katalysator nach Anspruch 1 oder 2, **dadurch gekennzeichnet,** daß das Gitter des Aluminiumoxids durch Erdalkalimetalloxid, Siliciumdioxid, Zirkondioxid oder durch Oxide der Seltenen Erden vor stabilisiert ist.

4. Verfahren zur Herstellung des Katalysators nach den Ansprüchen 1 bis 3, **gekennzeichnet durch** Beschichten des Trägers mittels einer Cersalz und/oder eine feste Cerverbindung sowie gegebenenfalls eine Verbindung der Promotorelemente Zirkon, Lanthan, Neodym, Praseodym und/oder Nickel enthaltenden wäßrigen Aluminiumoxidsuspension, Trocknen und Tempern dieses ersten Überzugs an Luft bei 300 - 950° C, nachfolgendes Imprägnieren mit wäßriger Platinsalzlösung, Trocknen und gegebenenfalls Zwischentempern, entsprechende Erzeugung des zweiten, Cer und gegebenenfalls Promotoren enthaltenden Aluminiumoxidüberzugs und nachfolgendes Imprägnieren mit wäßriger Palladiumsalzlösung, Trocknen und abschließendes Tempern, wobei Zwischentemperung und abschließende Temperung der beiden edelmetallhaltigen Schichten bei Temperaturen oberhalb 250° C durchgeführt werden.

5. Verfahren nach Anspruch 4, **dadurch gekennzeichnet,** daß das Cerdioxid als Cer(III)acetat eingebracht wird.

6. Verfahren nach Anspruch 4 oder 5, **dadurch gekennzeichnet,** daß durch Erdalkalimetalloxid, Siliciumdioxid, Zirkondioxid oder durch Oxide der Seltenen Erden in an sich bekannter Weise vorstabilisiertes Aluminiumoxid eingesetzt wird.

7. Verfahren nach den Ansprüchen 4 bis 6, **dadurch gekennzeichnet,** daß die beiden edelmetallhaltigen $Al_2O_3$-Schichten abschließend in einem Wasserstoff enthaltenden Gasstrom getempert werden.

8. Verwendung des Katalysators nach den Ansprüchen 1 bis 3 zur gleichzeitigen Konversion von Kohlenmonoxid, Kohlenwasserstoffen und Stickoxid aus den Abgasen von Verbrennungskraftmaschinen.

**Claims**

1. Rhodium-free three-way catalyst having a honeycomb-like carrier of ceramic or metal and a coating of an alumina of the transition series, the coating containing 25 - 50% by weight of cerium dioxide and 0.03 - 3% by weight of palladium and platinum in a weight ratio of 0.1 : 1 - 10 : 1 and the amounts by weight of alumina, cerium dioxide and noble metal summing to 100%, characterised by a layer-like structure of the coating, in which the first, lower layer contains platinum and the second, upper layer contains palladium.

2. Catalyst according to Claim 1, characterised in that up to 20% by weight of the amount of alumina is replaced by zirconium dioxide, lanthanum oxide $La_2O_3$, neodymium oxide $Nd_2O_3$, praseodymium oxide $Pr_6O_{11}$ or nickel oxide NiO in the form of an individual substance or as a mixture.

3. Catalyst according to Claim 1 or 2, characterised in that the lattice of the alumina is prestabilised by means of an alkaline earth metal oxide, silica or zirconium dioxide or by means of oxides of the rare earth metals.

4. Process for the preparation of the catalyst according to Claims 1 to 3, characterised by coating the carrier by means of an aqueous alumina suspension containing a cerium salt and/or a solid cerium compound and optionally a compound of the promoter elements zirconium, lanthanum, neodymium, praseodymium and/or nickel, drying and heating this first coating in air at 300 - 950° C, subsequently impregnating with an aqueous platinum salt solution, drying and optionally carrying out intermediate heating, producing, in a corresponding manner, the second alumina coating containing cerium and optionally promoters and subsequently impregnating with an aqueous palladium salt solution, drying and a final heating, intermediate heating and final heating of the two layers containing noble metal being carried out at temperatures above 250° C.

5. Process according to Claim 4, characterised in that the cerium dioxide is introduced in the form of cerium(III) acetate.

6. Process according to Claim 4 or 5, characterised in that alumina is prestabilized in a manner known per se by means of an alkaline earth metal oxide, silica or zirconium dioxide or by means of oxides of the rare earth metals is used.

7. Process according to any of Claims 4 to 6, characterised in that the two $Al_2O_3$ layers containing noble metal are finally heated in a hydrogen-containing gas stream.

8. Use of the catalyst according to any of Claim 1 to 3 for simultaneous conversion of carbon monoxide, hydrocarbons or oxides of nitrogen from the exhaust gases of internal combustion engines.

**Revendications**

1. Catalyseur à trois fonctions sans rhodium ayant un support en forme de nid d'abeilles en céramique ou en métal, avec une couverture en oxyde d'aluminium de la série de transition, la couverture contenant 25 à 50 % en poids de dioxyde de cérium et 0,03 à 3 % de palladium et de platine dans un rapport pondéral de 0,1:1 - 10:1 et les quantités en poids d'oxyde d'aluminium, de dioxyde de cérium, et de métal noble se complètant à 100 %, caractérisé par une construction du type stratifié de la couverture dans laquelle la première couche, inférieure renferme du platine et la seconde couche, supérieure, du palladium.

2. Catalyseur selon la revendication 1, caractérisé en ce que jusqu'à 20 % en poids de la quantité d'oxyde d'aluminium est remplacé par du dioxyde de zirconium, de l'oxyde de lanthane $La_2O_3$, de l'oxyde de néodyme $Nd_2O_3$, de l'oxyde de praséodyme $Pr_6O_{11}$, de l'oxyde de nickel NiO seul ou en mélange.

3. Catalyseur selon la revendication 1 ou 2, caractérisé en ce que le réseau de l'oxyde d'aluminium est préstabilisé par un oxyde de métal alcalino-terreux, du dioxyde de silicium, du dioxyde de zirconium, ou par des oxydes de terres rares.

4. Procédé de fabrication d'un catalyseur selon les revendications 1 à 3, caractérisé par le revêtement du support avec une suspension aqueuse d'oxyde d'aluminium contenant un sel de cérium et/ou une combinaison chimique insoluble de cérium et le cas échéant une combinaison chimique des éléments promoteurs zirconium, lauthane, néodyme, praséodyme et/ou nickel, par le séchage et par le recuit de cette première couche, à l'air à 300-950° C, par l'imprégnation subséquente avec une solution aqueuse d'un sel de platine, par le séchage et le cas échéant recuit intermédiaire, par le revêtement correspondant de la deuxième couche d'oxyde d'aluminium contenant du cérium et le cas échéant des promoteurs et imprégnation subséquente avec une solution de sel de palladium dans l'eau, par le séchage et recuit terminal, le recuit intermédiaire et le recuit terminal des deux couches renfermant un métal noble, étant effectués à des températures au dessus de 250° C.

5. Procédé selon la revendication 4, caractérisé en ce que le dioxyde de cérium est introduit sous forme d'acétate de cérium (III).

6. Procédé selon la revendication 4 ou 5, caractérisé en ce que l'oxyde d'aluminium est prestabilisé d'une manière connue en soi par un oxyde de métal alcalino-terreux, du dioxyde de silicium, du dioxyde de zirconium ou par des oxydes de terres rares.

7. Procédé selon les revendications 4 à 6, caractérisé en ce que les deux couches d'$Al_2O_3$ contenant un métal noble sont recuites à la fin, dans un courant de gaz contenant de l'hydrogène.

8. Utilisation du catalyseur selon les revendications 1 à 3 en vue de la conversion simultanée de l'oxyde de Carbone, des hydrocarbures et de l'oxyde d'azote à partir des gaz d'échappement des machines à combustion interne.